# EUROPEAN PATENT SPECIFICATION

(11) **EP 0 595 663 B1**
(45) Date of publication and mention of the grant of the patent: **22.07.1998**
(21) Application number: 93308724.9
(22) Date of filing: 01.11.1993
(51) Int. Cl.: H04N 5/21

(54) **Noise reduction for video signals**
Rauschverminderung für Videosignale
Réduction de bruit de signaux vidéo

(30) Priority: 30.10.1992 KR 9220206; 26.12.1992 KR 9225635
(43) Date of publication of application: 04.05.1994
(73) Proprietor: SAMSUNG ELECTRONICS CO., LTD., Suwon-city, Kyungki-do 441-373 (KR)
(72) Inventor: Hwang, Deog-won, Seoul (KR)
(74) Representative: Stanley, David William

(56) References cited:
- FR-A- 2 359 559
- FR-A- 2 509 547
- GB-A- 2 243 745
- PATENT ABSTRACTS OF JAPAN vol. 9, no. 315 (E-365) 11 December 1985 & JP-A-60 149 264 (SONY) 6 August 1985
- PATENT ABSTRACTS OF JAPAN vol. 8, no. 66 (E-234) 28 March 1984 & JP-A-58 215 175 (SONY) 14 December 1983
- PATENT ABSTRACTS OF JAPAN vol. 14, no. 133 (E-902) 13 March 1990 & JP-A-02 001 604 (SONY) 5 January 1990
- PATENT ABSTRACTS OF JAPAN vol. 9, no. 274 (E-354) 31 October 1985 & JP-A-60 117 909 (SONY) 25 June 1985

## Description

The present invention relates to noise reduction for video signals.

Generally, video signal processing systems, e.g. televisions, Video Tape Recorders (VTR's), etc. include circuits for cancelling the noise contained in a video signal, as means for acquiring good picture quality.

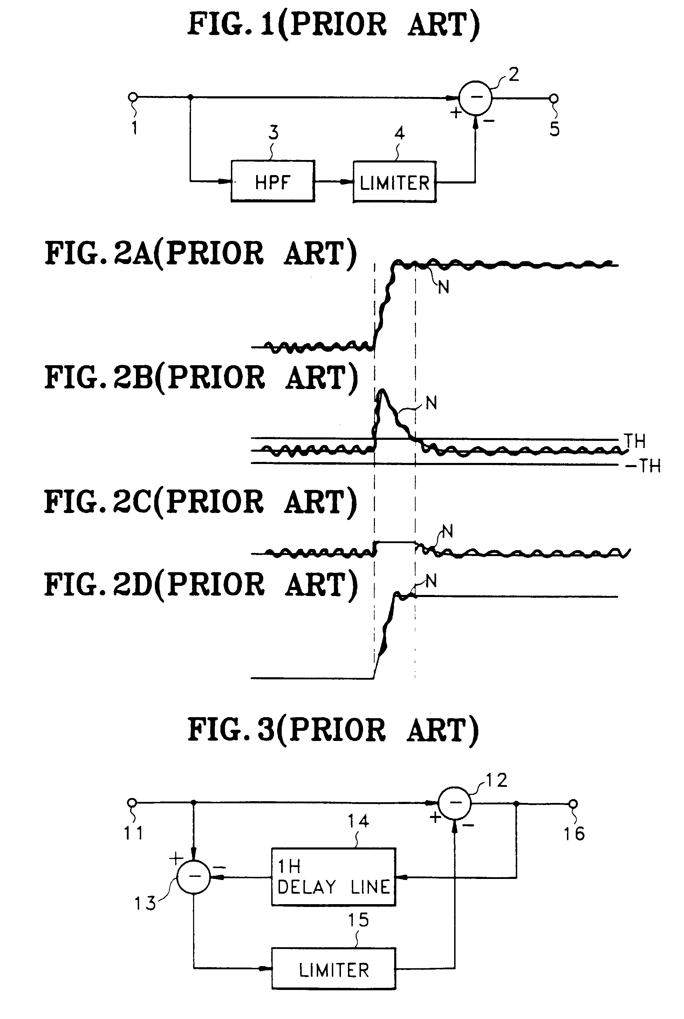

Figure 1 of the accompanying diagrammatic drawings is a block diagram of a conventional noise canceller for a video signal. The conventional noise canceller comprises a high-pass filter (HPF) 3 for high-pass-filtering a video signal input via an input port 1, a limiter 4 for extracting and outputting the noise components below a threshold from the output of HPF 3, and a subtracter 2, for subtracting the output of limiter 4 from the video signal and outputting the result via an output port 5.

Figures 2A-2D of the accompanying diagrammatic drawings are operation waveforms of the conventional noise canceller shown in Figure 1, with N indicating noise and TH representing the threshold of the limiter.

Figure 2A shows a video signal input via input port 1 and containing noise. Figure 2B shows the video signal having passed through HPF 3, whereby a pulse is formed in correspondence with the sharply rising leading edge thereof. Figure 2C shows noise components in which the signal of Figure 2B is limited to a predetermined threshold level. Figure 2D shows the output in which the noise components of Figure 2C are subtracted from the video signal of Figure 2A. In Figure 2D, however, it is noted that the noise components are not cancelled in the portions in which the signal changes sharply.

Referring to Figures 1 and 2A-2D, the video signal of Figure 2A is input to subtracter 2 and HPF 3 via input port 1. Limiter 4 connected in series to HPF 3 extracts and outputs to subtracter 2 the noise components contained in the video signal. Subtracter 2 cancels the output of limiter 4, that is, the noise components of Figure 2C, from the input video signal, and then outputs the video signal without noise to the output port 5. The noise canceller of Figure 1 can cancel most of the noise components, i.e. low-level components, but is unable to cancel those above the threshold level. As shown in Figure 2C, since, at the transitional edges of a signal, the noise occurs at a level higher than the threshold, the noise is blocked by limiter 4 and thus cannot be cancelled.

Figure 3 of the accompanying diagrammatic drawings shows another conventional noise canceller for a video signal which cancels noise using a correlation of the horizontal lines of a video signal.

Referring to Figure 3, a video signal is input to first and second subtracters 12 and 13 via input port 11. The output signal of first subtracter 12 is delayed by delay line 14 by 1H and is input to second subtracter 13. Here, H denotes a horizontal scan period. Second subtracter 13 subtracts the delayed signal input from delay line 14 from the video signal input from input port 11 so as to extract and output the noise components and a correlation component to limiter 15. Limiter 15 extracts the noise components and sends them to first subtracter 12. First subtracter 12 subtracts the noise components from the video signal, and feeds back the subtracted video signal to delay line 14 so that the video signal is averaged to cancel the noise and is output to output port 16.

However, in the circuit shown in Figure 3, if there is no correlation between horizontal lines, other signal components (besides the noise components) of the video signal are cancelled. This deteriorates the resolution of a reproduced picture.

United States Patent No. 4,885,639 (December 5, 1989, by Sony Corporation of Japan, entitled "Apparatus for Eliminating a Noise Signal") has been presented to overcome the drawbacks of the conventional noise cancellers of Figures 1 and 3. In the above patent, an A/D converter, a limiter having multiple threshold values with respect to a digital signal and a switching circuit for selecting the outputs are installed at the output port of the conventional circuit shown in Figure 1 to cancel noises at the edges. Further, a window detector and a correlation detector are provided at the output port of the HPF of the conventional circuit, so as to solve the disadvantages which exist when there is no correlation between lines. However, the circuit in the above patent was very complicated.

French patent application FR 2,509,547 discloses a noise reduction circuit for a video signal in which three successive line signals of a video frame are combined and maximum and minimum value signals derived therefrom, these maximum and minimum value signals are then combined algebraically with a view to cancel out noise components.

Patent abstracts of Japan Volume 8, No. 66, (E-234) & JP-A-58 215 175 discloses a further noise cancelling arrangement including delay circuits and minimum and maximum value detectors.

Patent abstracts of Japan Volume 9, No. 315, (E-365) & JP-A-60 149 264 discloses a logical filter device having a first positive logical processing element which calculates the maximum level of minimum values for the plural input signals and a second negative logic filter which obtains the minimum level of maximum values of input signals.

Preferred embodiments of the present invention aim to provide a noise canceller for a video signal which is simplified to cancel efficiently noise contained in the video signal, using the correlation between horizontal lines.

It is another aim to provide a noise canceller for a video signal which, even when the correlation between the lines is weak, can prevent the distortion of signal components so as to acquire a faithfully reproduced video signal.

According to the present invention, there is provided a noise reduction circuit for a video signal comprising:
a video signal delay circuit for outputting, from consecutively input video signals, a succeeding line video signal, a present line video signal which is delayed by one horizontal line, and a preceding line video signal which is delayed by two horizontal lines;
a minimum value detector for a horizontal line which, in a first minimum value comparison step, compares the succeeding line video signal with the present line video signal so as to output a first minimum value, and, in a second minimum value comparison step, compares the present line video signal with the preceding line video signal, so as to output a second minimum value;
a maximum value selector for comparing said first and second minimum values so as to select and output the higher of the two;
a maximum value detector for a horizontal line which, in a first maximum value comparison step, compares the succeeding line video signal with the present line video signal so as to output a first maximum value, and in a second maximum value comparison step compares the present line video signal with the preceding line video signal, so as to output a second maximum value;
a minimum value selector for comparing said first and second maximum values so as to select and output the lower of the two;
an adder for summing the maximum value output from the maximum value selector and the minimum value output from the minimum value selector so as to output a summed signal containing the correlation noise of a horizontal line of a video signal; and
a subtracter for subtracting the present line video signal from the summed signal output from the adder so as to output a video signal with reduced noise.

Preferably, the minimum value detector for a horizontal line comprises:
a first minimum value detector which receives the succeeding line video signal and present line video signal and compares the two video signals so as to detect and output the lower-level signal thereof; and
a second minimum value detector which receives the present line video signal and preceding line video signal and compares the two video signals so as to detect and output the lower-level signal thereof.

Preferably, the first minimum value detector comprises:
a comparator for receiving the succeeding line video signal and present line video signal to compare the levels thereof; and
a multiplexer for outputting one of the succeeding line video signal and present line video signal according to the output of the comparator.

Preferably, the second minimum value detector comprises:
a comparator for receiving the present line video signal and preceding line video signal to compare the levels thereof; and
a multiplexer for outputting one of the present line video signal and preceding line video signal according to the output of the comparator.

Preferably, the maximum value detector for a horizontal line comprises:
a first maximum value detector which receives the succeeding line video signal and present line video signal and compares the two video signals so as to detect and output the higher-level signal thereof; and
a second maximum value detector which receives the present line video signal and preceding line video signal and compares the two video signals so as to detect and output the higher-level signal thereof.

Preferably, the first maximum value detector comprises:
a comparator for receiving the succeeding line video signal and present line video signal to compare the levels thereof; and
a multiplexer for outputting the higher-level signal between the succeeding line video signal and present line video signal, according to the output of the comparator.

Preferably, the second maximum value detector comprises:
a comparator for receiving the present line video signal and preceding line video signal to compare the levels thereof; and
a multiplexer for outputting the higher-level signal between the present line video signal and preceding line video signal, according to the output of the comparator.

Preferably, the video signal delay circuit comprises:
a first delay line for supplying the present line video signal generated by delaying the consecutively input video signals by one horizontal line to the first and second minimum value detectors and first and second maximum value detectors; and
a second delay line serially connected to the output of the first delay line for supplying the preceding line video signal generated by delaying the output signal of the first delay line by one horizontal line to the second minimum value detector and second maximum value detector.

Preferably, the maximum value selector comprises:
a comparator for receiving the first and second minimum values to compare the levels thereof; and
a multiplexer for outputting the higher-level signal between the first and second minimum values, according to the output of the comparator.

Preferably, the minimum value selector comprises:
a comparator for receiving the first and second maximum values to compare the levels thereof; and
a multiplexer for outputting the lower-level signal between the first and second maximum values, according to the output of the comparator.

A noise reduction circuit for a video signal as above may further comprise:
a correlation detector for comparing the succeeding line video signal, present line video signal and preceding line video signal so as to detect the correlation between horizontal lines and output a selection signal; and
an output selector for receiving the output signal of the subtracter and the present line video signal so that, according to the selection signal of the correlation detector, if correlation does exist, the output of the subtracter is selected, and if no correlation exists, the present line video signal is selected.

Preferably, the correlation detector comprises:
an adder for summing the succeeding line video signal and preceding line video signal;
an attenuator for receiving the output of the adder so as to reduce the level by half;
a signal subtracter for subtracting the output of the attenuator from the present line video signal; and
a comparator for comparing the output of the signal subtracter with a reference level to output a selection signal.

Preferably, the output selector comprises a multiplexer.

The invention extends to a video signal processing apparatus provided with a noise reduction apparatus according to the above aspect of the invention.

Such an apparatus may comprise a television and/or video recorder and/or reproducer.

For a better understanding of embodiments of the invention, and to show how the same may be carried into effect, reference will now be made, by way of example, to Figures 4 to 10 of the accompanying diagrammatic drawings, in which:
Figure 4 is a block diagram of one example of a noise reduction circuit for a video signal according to the present invention;
Figures 5A-5K illustrate signal waveforms at respective portions of the noise reduction circuit of Figure 4;
Figure 6 is a block diagram of another embodiment of a noise reduction circuit for a video signal according to the present invention;
Figure 7 is a circuit diagram of one example of a minimum value detector or maximum value detector shown in Figures 4 and 6;
Figure 8 is a circuit diagram of one example of a correlation detector shown in Figure 6;
Figure 9 is a circuit diagram of one example of an output selector shown in Figure 6; and
Figures 10A-10E are operation waveforms of a conventional noise canceller and a noise reduction circuit of Figure 6.

In the figures, like reference numerals denote like or corresponding parts.

In the following, the illustrated noise reduction circuits are conveniently referred to as "noise cancellers", although it will be appreciated that noise may not always be cancelled absolutely, but rather reduced to a significant degree.

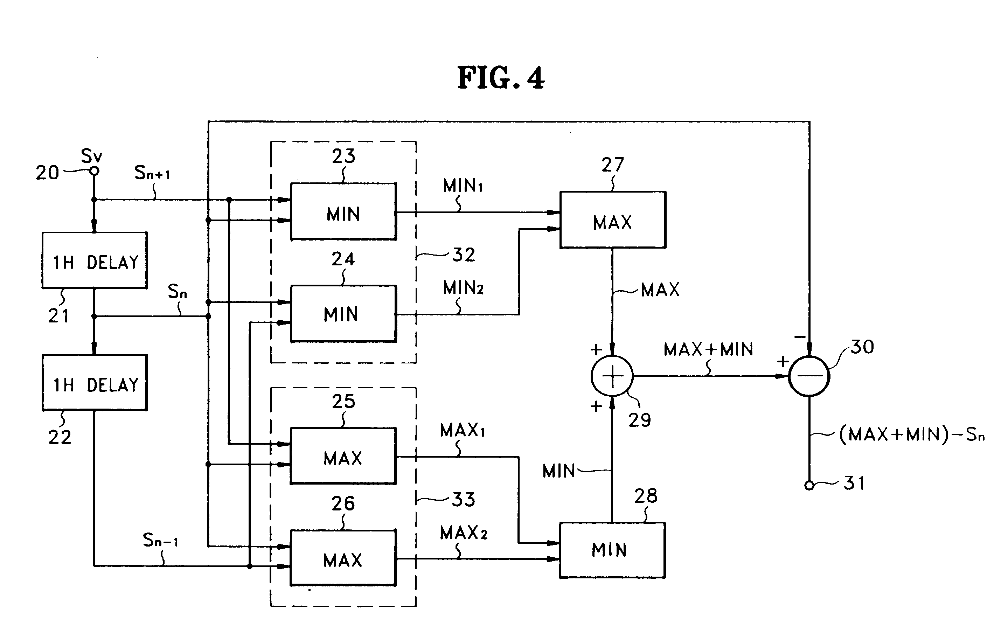

Referring to Figure 4, input video signals are delayed by one horizontal (H) period so that the output signal of a first delay line 21 at a reference time point t₀ is taken as a present line video signal Sₙ. A signal input to an input port 20 at the reference time point t₀ is taken as a succeeding line video signal Sₙ₊₁. The output of a second delay line 22 at the reference time point t₀ is taken as a preceding line video signal Sₙ₋₁. These signals are integrated to cancel the noise components of the video signal, using the correlation between horizontal lines.

Specifically, video signal Sᵥ is input to first delay line 21, first minimum value detector (MIN) 23 and first maximum value detector (MAX) 25, via input port 20. The input video signal Sᵥ is delayed by first delay line 21 by one H period and then output simultaneously to second delay line 22, first minimum value detector 23, second minimum value detector 24, first maximum detector 25 and a second maximum detector 26. Second delay line 22 is serially connected to first delay line 21, to delay again the delayed signal by one H period, to then be output to second minimum value detector 24 and second maximum value detector 26. Therefore, the continuously input video signals Sᵥ are one-H-delayed by first delay line 21 to become the present line video signal Sₙ. Taking this as the reference, video signal Sᵥ, input after a one H period delay, becomes the succeeding line video signal Sₙ₊₁. The output of second delay line 22 is input before the one H period delay to become the preceding line video signal Sₙ₋₁ which is input to minimum value detector 32 and maximum value detector 33. Here, minimum value detector 32 is composed of first minimum value detector 23 and second minimum value detector 24. Maximum value detector 33 consists of first maximum value detector 25 and second maximum detector 26.

First minimum value detector 23 compares the succeeding line video signal Sₙ₊₁ with the present line video signal Sₙ so as to output a first minimum value MIN₁. Second minimum value detector 24 compares the present line video signal Sₙ with the preceding line video signal Sₙ₋₁ so as to output a second minimum value MIN₂.

First maximum value detector 25 compares the succeeding line video signal Sₙ₊₁ with the present line video signal Sₙ so as to output a first maximum value MAX₁. Second maximum value detector 26 compares the present line video signal Sₙ with the preceding line video signal Sₙ₋₁ so as to output a second maximum value MAX₂.

Maximum value selector 27 compares the output of first minimum value detector 23 and the output of second minimum detector 24 so as to output a maximum value MAX.

Minimum value selector 28 compares the output of first maximum value detector 25 and the output of second maximum detector 26 so as to output a minimum value MIN.

Adder 29 sums the output of maximum value selector 27 and the output of minimum value selector 28 so as to output a signal representing the resulting total MAX + MIN.

Subtracter 30 subtracts present line video signal Sₙ from the summed signal (i.e. the output of adder 29) so as to output the video signal without noise to output port 31.

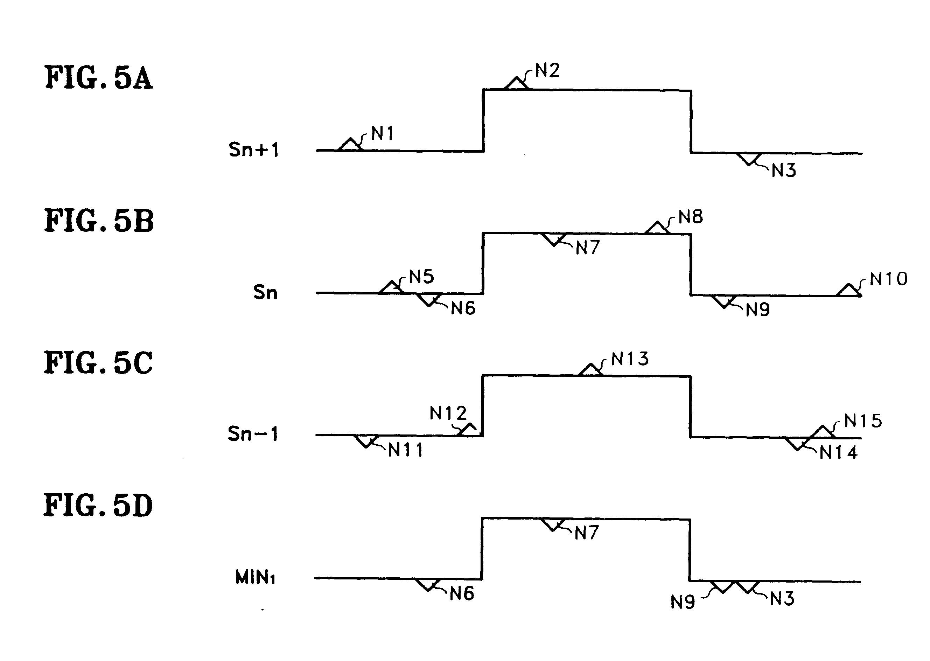

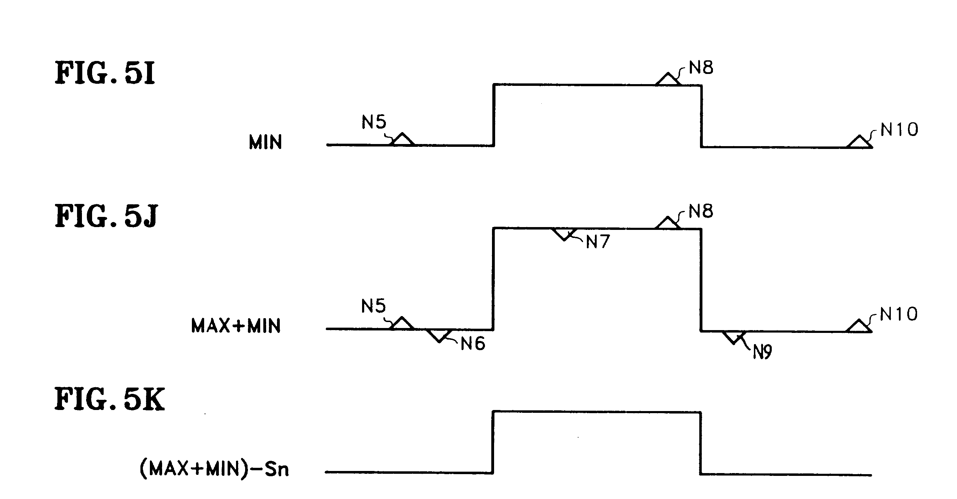

Referring to Figures 5A-5K illustrating signal waveforms at respective blocks of the noise canceller of Figure 4, it can be noted that, when the video signals of adjacent lines are summed, since the level of correlated signal components is doubled without increasing the noise component level (due to the noise occurring randomly, i.e. without correlation), the averaging of the video signals cancels the noise. N1 through N15 indicated in Figures 5A-5K briefly represent noise components randomly contained in video signals.

Figure 5A shows the waveform of the succeeding line video signal Sₙ₊₁ which contains noise components represented as N1, N2 and N3. Figure 5B shows the waveform of the present line video signal Sₙ which contains noise components N5, N6, N7, N8, N9 and N10. Figure 5C shows the waveform of the preceding line video signal Sₙ₋₁ containing noise components Nll, N12, N13, N14 and N15.

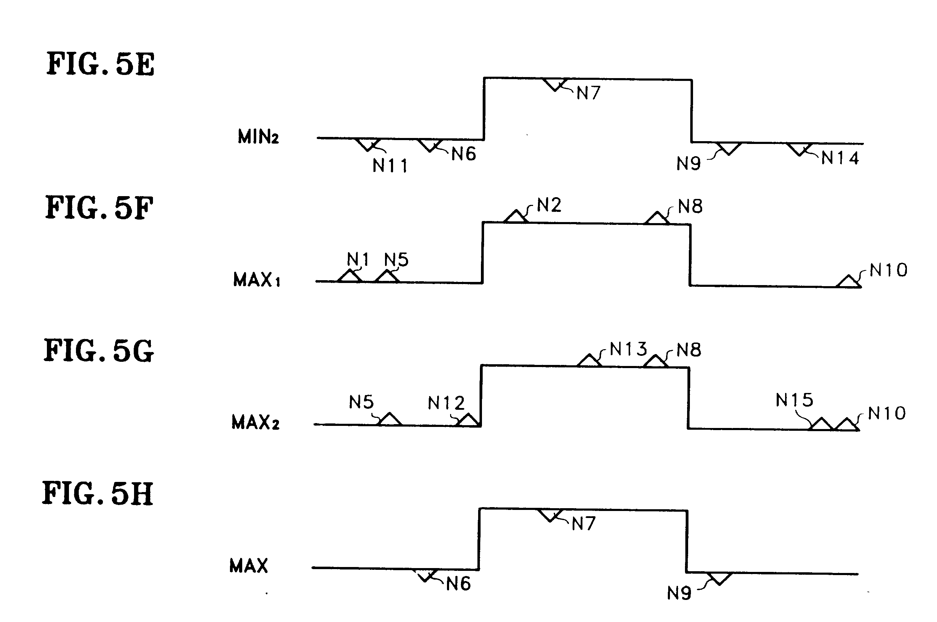

Figure 5D is a waveform diagram in which the succeeding line video signal Sₙ₊₁ (Figure 5A) and the present line video signal Sₙ (Figure 5B) are compared so as to obtain first minimum value MIN₁. Figure 5E is a waveform diagram in which the present line video signal Sₙ of Figure 5B and the preceding line video signal Sₙ₋₁ of Figure 5C are compared so as to obtain second minimum value MIN₂.

Figure 5F is a waveform diagram in which the succeeding line video signal Sₙ₊₁ of Figure 5A and the present line video signa Sₙ of Figure 5B are compared so as to obtain first maximum value MAX₁. Figure 5G is a waveform diagram in which the present line video signal Sₙ of Figure 5B and the preceding line video signal Sₙ₋₁ of Figure 5C are compared so as to obtain second maximum value MAX₂.

Figure 5H is a waveform diagram in which the first minimum value MIN₁ of Figure 5D and the second minimum value MIN₂ of Figure 5E are compared so as to obtain maximum value MAX. Figure 5I is a waveform diagram in which the first maximum value MAX₁ of Figure 5F and the second maximum value MAX₂ of Figure 5G are compared so as to obtain minimum value MIN.

Figure 5J is a waveform diagram of a summed signal MAX+MIN in which the maximum value of the minimum values of Figure 5H and the minimum value of the maximum values of Figure 51 are summed.

Figure 5K shows a difference signal (MAX+MIN)-Sₙ in which the present line video signal Sₙ of Figure 5B is subtracted from the summed signal of Figure 5J. The difference signal is the video signal output without noise.

Now, operation of the noise canceller shown in Figure 4 will be described below with reference to the operation waveform diagrams of Figures 5A-5K.

First minimum value detector 23 compares the succeeding line video signal Sₙ₊₁ of Figure 5A and the present line video signal Sₙ of Figure 5B and thus detects first minimum value MIN₁ containing the N6, N7, N9 and N3 noise components which are minimum levels of the two line signals shown in Figure 5D, so as to output the first minimum value to maximum value selector 27.

Second minimum value detector 24 compares the present line video signal Sₙ of Figure 5B and the preceding line video signal Sₙ₋₁ of Figure 5C and thus detects second minimum value MIN₂ containing the N11, N6, N7, N9 and N14 noise components which are minimum levels of the two line signals shown in Figure 5E, so as to output the second minimum value to maximum value selector 27.

Maximum value selector 27 receives and compares minimum values from first and second minimum value detectors 23 and 24, selecting only the higher-level maximum value, as shown in Figure 5H, to output the selected value to adder 29. For instance, when the waveform of Figure 5D (the output of first minimum value detector 23) and the waveform of Figure 5E (the output of second minimum value detector 24) are compared, since the video signal level as shown in Figure 5D is higher than the level of noise component N11 as shown in Figure 5E, the output of first minimum value detector 23 is selected to be output. Also, noise component N6 being the same level in both Figures 5D and 5E means that this noise component is output without change. Therefore, maximum value selector 27 compares first minimum value MIN₁ and second minimum value MIN₂, and if they differ, selects the greater, so that the N11, N3 and N14 noise components which are present in only one side of inputs are cancelled and the N6, N7 and N9 noise components (called "correlation" noise) which are present in both sides of inputs as shown in Figure 5G are output to adder 29 along with the signal component.

Meanwhile, first maximum value detector 25 compares the succeeding line video signal Sₙ₊₁ of Figure 5A and the present line video signal Sₙ of Figure 5B and thus detects first maximum value MAX₂ containing the N1, N5, N2, N8 and N10 noise components which are maximum levels of the two line signals as shown in Figure 5F, so as to output the first maximum value to minimum value selector 28.

Second maximum value detector 26 compares the present line video signal Sₙ of Figure 5B and the preceding line video signal Sₙ₋₁ of Figure 5C and thus detects second maximum value MAX₂ containing the N5, N12, N13, N8, N15 and N10 noise components which are maximum levels of the two line signals as shown in Figure 5G, so as to output the second maximum value to minimum value selector 28.

Minimum value selector 28 receives first and second maximum values MAX₁ and MAX₂ to compare the received minimum values, and selects only the lower-level minimum value, as shown in Figure 51, to output the selected value to adder 29. For instance, when the level of Figure 5F (the output of first maximum value detector 25) and the level of Figure 5G (the output of second maximum value detector 26) are compared, since the video signal level of Figure 5G is lower than the level of noise component N1 of Figure 5F, the output of second maximum value detector 26 is selected to be output, and since the level of noise component N5 contained in the waveform of Figure 5F is the same as the level of noise component N5 contained in the waveform of Figure 5G, noise component N5 is output without change. Therefore, minimum value selector 28 compares first maximum value MAX₁ and second maximum value MAX₂, and if they differ, selects the smaller one, so that the N1, N12, N2, N13 and N15 noise components which are present in only one side of inputs are cancelled and the N5, N8 and N10 noise components (correlation noise) which are present in both sides of inputs as shown in Figure 5I are output to adder 29 along with the signal component.

Adder 29 sums the output of maximum value selector 27 and the output of minimum value selector 28, and applies the summed signal as shown in Figure 5J to subtracter 30. Here, as mentioned above, while the level of the summed signal from adder 29 is doubled, the levels of the noise components do not increase because the noise occurs randomly.

Subtracter 30 subtracts the present line video signal Sₙ (Figure 5B) from the summed signal (Figure 5J), and outputs a difference signal without noise components as shown in Figure 5K, as the video signal.

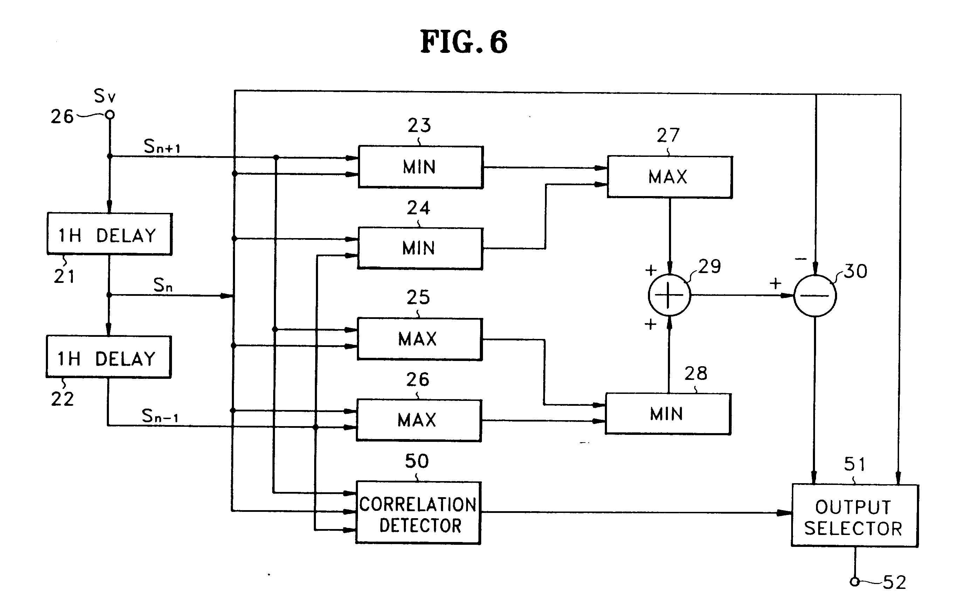

Figure 6 is another embodiment of the present invention, which employs a correlation detector and output selector in addition the circuit of Figure 4, so as to prevent the distortion of signal components which may be created due to a lack of correlation.

In Figure 6. first delay line 21, second delay line 22, first minimum value detector 23, second minimum value detector 24, first maximum value detector 25. second maximum value detector 26, maximum value selector 27, minimum value selector 28, adder 29 and subtracter 30 are the same as in Figures 4 and 5.

The correlation detector 50, which is newly included in Figure 6, compares the succeeding line video signal Sₙ₊₁, present line video signal Sₙ and preceding line video signal Sₙ₋₁, so as to determine the correlation between them. If the present line video signal Sₙ has correlation with the other two line video signals, correlation detector 50 controls output selector 51 to select the output signal of subtracter 30 (processed as described above). If the present line video signal has no correlation with the other two video signals, correlation detector 50 controls output selector 51 to select the present line video signal Sₙ directly.

Output selector 51 selects one of the output of subtracter 30 and the present line video signal Sₙ according to the selected signal of correlation detector 50, and outputs the selected one to output port 52.

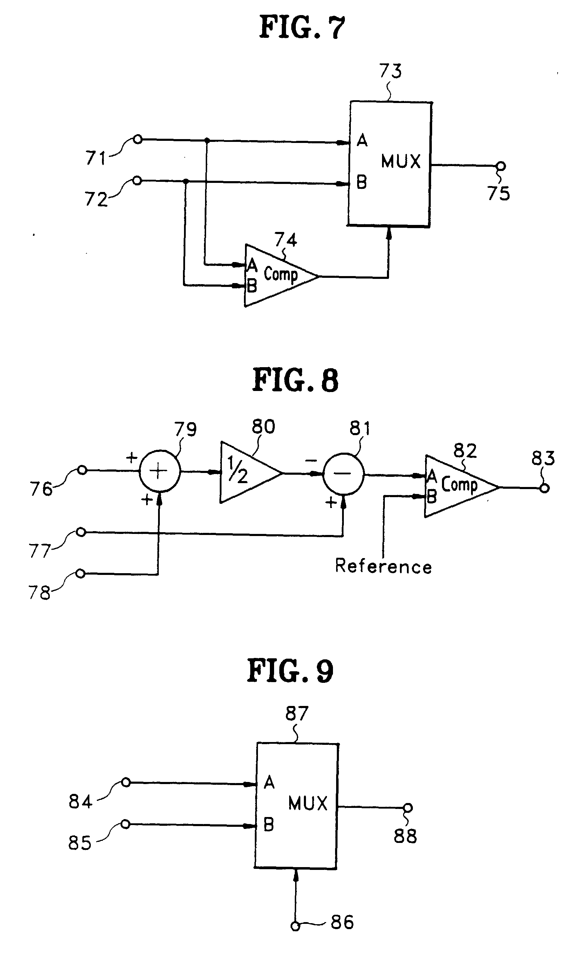

Figure 7 shows one embodiment of first and second minimum value detector 23 and 24, first and second maximum value detector 25 and 26, maximum value selector 27 and minimum value selector 28 which are shown in Figures 4 and 6. They can be implemented with a multiplexer and comparator.

In Figure 7, if the circuit is used as the first minimum value detector 23, the signals to be compared, that is, succeeding line video signal Sₙ₊₁ and present line video signal Sₙ, are input to input ports A and B of multiplexer 73 and comparator 74 via input ports 71 and 72, respectively. Comparator 74 compares the inputs of input ports A and B and outputs the result to the selection port of multiplexer 73 so as to select one of these inputs to be output to output port 75. The following Table I illustrates the output of comparator 74 and multiplexer 73 according to the signals to be compared.

**Table 1**

| | comparator output | MUX output | |
|---|---|---|---|
| state | | MAX | MIN |
| A ≥ B | H | A | B |
| A < B | L | B | A |

In Table 1, if the circuit of Figure 7 is used as the first maximum value detector 25 and the signal of input port A is greater than the signal of input port B, comparator 74 outputs a "high" signal to the selection port of multiplexer 73 so that multiplexer 73 selects and outputs the input signal of input port A. If the circuit is used as the first minimum value detector 23, multiplexer 73 outputs the input signal of input port B. If the signal of input port A is smaller than the signal of input port B, the comparator and multiplexer function in an opposite manner.

In Figure 8, the succeeding line video signal Sₙ₊₁ and preceding line video signal Sₙ₋₁ are summed in adder 79, thus doubling the level and supplying the summed signal to an attenuator 80. Attenuator 80 reduces the input level by half and outputs the attenuated signal to subtracter 81. Subtracter 81 subtracts the output of attenuator 80 from the present line video signal Sₙ, and outputs the difference signal to input port A of comparator 82. Comparator 82 compares the reference signal input to input port B and the output of subtracter 81 so as to detect the correlation of the three line signals. If the three line signals have a strong correlation, the output signal of subtracter 81 is smaller than the reference value, so that comparator 82 outputs a "low" signal. If they have no correlation, the output of subtracter 81 is greater than the reference value so that comparator 82 outputs a "high" signal.

Referring to Figure 9, the present line video signal Sₙ is input to input port A of multiplexer 87 via input port 84 and the output of subtracter 30 is input to input port B of multiplexer 87 via input port 85, so that one of these inputs is selected and output via port 88, according to the output signal of comparator 82 of Figure 8 received via port 86. In other words, if there is strong correlation between signals and the output of comparator 82 is low, the output signal of subtracter 30 at input port B is selected to be output. If there is no correlation and the output of comparator 82 of Figure 8 is high, the present line video signal Sₙ at input port A is selected to be output.

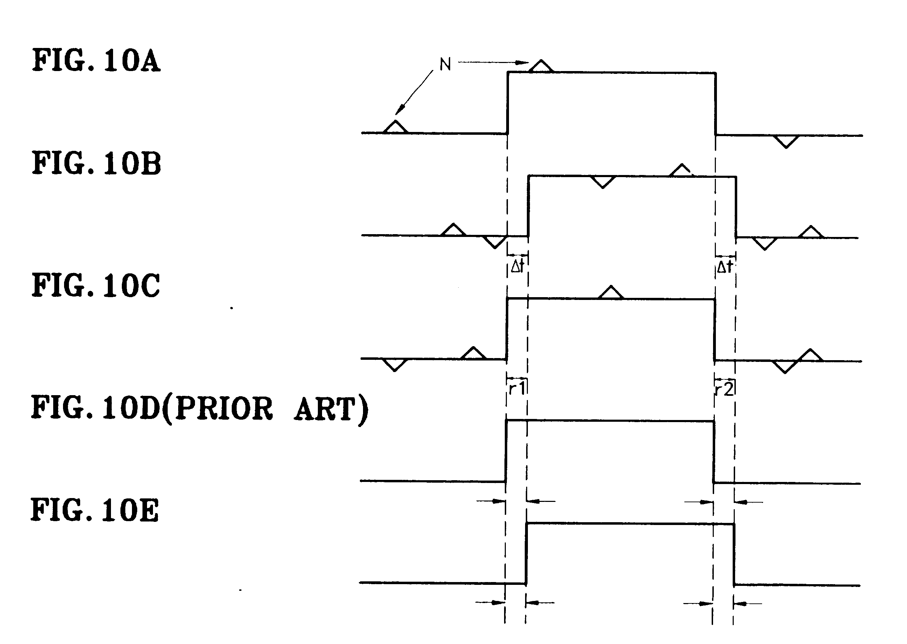

Figures 10A, 10B and 10C illustrate waveforms of video signals Sₙ₊₁, Sₙ and Sₙ₋₁ which contain noise. Especially, Figure 10B is the waveform of the present line video signal Sₙ which is delayed by Δt to create portions rl and r2 which have no correlation.

Figure 10D shows a waveform in which noise is cancelled from the waveforms of Figures 10A, 10B and 10C, using a conventional noise canceller. It can be seen from the waveform of Figure 10D that the distortion of the present line output signal is created in the leading edge r1 and falling edge r2 which are portions without correlation.

Figure 10E shows a waveform in which noise is cancelled from the waveforms of Figure 10A, 10B and 10C, using the circuit of Figure 6. The correlation detector 50 of Figure 6 selects the present line video signal Sₙ of Figure 10B in the non-correlating portions r1 and r2 so as to cancel noise, without any distortion of the present line output signal.

The above-described embodiments of the present invention can efficiently extract and cancel only the noise contained in a video signal, using the correlation of video signals, so as to prevent the deterioration of resolution during reproduction. Further, the illustrated embodiments of the present invention may be easy to implement, because of the simplified circuitry.

## Claims

1. A noise reduction circuit for a video signal comprising:
a video signal delay circuit (21, 22) for outputting, from consecutively input video signals, a succeeding line video signal, a present line video signal which is delayed by one horizontal line, and a preceding line video signal which is delayed by two horizontal lines;
a minimum value detector (32) for a horizontal line which, in a first minimum value comparison step, compares the succeeding line video signal with the present line video signal so as to output a first minimum value, and, in a second minimum value comparison step, compares the present line video signal with the preceding line video signal, so as to output a second minimum value;
a maximum value selector (27) for comparing said first and second minimum values so as to select and output the higher of the two;
a maximum value detector (33) for a horizontal line which, in a first maximum value comparison step, compares the succeeding line video signal with the present line video signal so as to output a first maximum value, and in a second maximum value comparison step compares the present line video signal with the preceding line video signal, so as to output a second maximum value;
a minimum value selector (28) for comparing said first and second maximum values so as to select and output the lower of the two;
an adder (29) for summing the maximum value output from the maximum value selector (27) and the minimum value output from the minimum value selector (28) so as to output a summed signal containing the correlation noise of a horizontal line of a video signal; and
a subtracter (30) for subtracting the present line video signal from the summed signal output from the adder so as to output a video signal with reduced noise.

2. A noise reduction circuit for a video signal as claimed in claim 1, wherein the minimum value detector for a horizontal line comprises:
a first minimum value detector (23) which receives the succeeding line video signal and present line video signal and compares the two video signals so as to detect and output the lower-level signal thereof; and
a second minimum value detector (24) which receives the present line video signal and preceding line video signal and compares the two video signals so as to detect and output the lower-level signal thereof.

3. A noise reduction circuit for a video signal as claimed in claim 2, wherein the first minimum value detector (23) comprises:
a comparator (74) for receiving the succeeding line video signal and present line video signal to compare the levels thereof; and
a multiplexer (73) for outputting one of the succeeding line video signal and present line video signal according to the output of the comparator (74).

4. A noise reduction circuit for a video signal as claimed in claim 2 or 3, wherein the second minimum value detector comprises:
a comparator (74) for receiving the present line video signal and preceding line video signal to compare the levels thereof; and
a multiplexer (73) for outputting one of the present line video signal and preceding line video signal according to the output of the comparator (74).

5. A noise reduction circuit for a video signal as claimed in any of the preceding claims, wherein the maximum value detector for a horizontal line comprises:
a first maximum value detector (25) which receives the succeeding line video signal and present line video signal and compares the two video signals so as to detect and output the higher-level signal thereof; and
a second maximum value detector (26) which receives the present line video signal and preceding line video signal and compares the two video signals so as to detect and output the higher-level signal thereof.

6. A noise reduction circuit for a video signal as claimed in claim 5, wherein the first maximum value detector (25) comprises:
a comparator (74) for receiving the succeeding line video signal and present line video signal to compare the levels thereof; and
a multiplexer (73) for outputting the higher-level signal between the succeeding line video signal and present line video signal, according to the output of the comparator.

7. A noise reduction circuit for a video signal as claimed in claim 5 or 6, wherein the second maximum value detector (26) comprises:
a comparator (74) for receiving the present line video signal and preceding line video signal to compare the levels thereof; and
a multiplexer (73) for outputting the higher-level signal between the present line video signal and preceding line video signal, according to the output of the comparator (74).

8. A noise reduction circuit for a video signal as claimed in claim 5, 6 or 7 as dependant upon claim 2, 3 or 4, wherein the video signal delay circuit (21, 22) comprises:
a first delay line (21) for supplying the present line video signal generated by delaying the consecutively input video signals by one horizontal line to the first and second minimum value detectors (23, 24) and first and second maximum value detectors (25, 26); and
a second delay line (22) serially connected to the output of the first delay line (21) for supplying the preceding line video signal generated by delaying the output signal of the first delay line by one horizontal line to the second minimum value detector (24) and second maximum value detector (26).

9. A noise reduction circuit for a video signal as claimed in claim 1, wherein the maximum value selector (33) comprises:
a comparator (74) for receiving the first and second minimum values to compare the levels thereof; and
a multiplexer (73) for outputting the higher-level signal between the first and second minimum values, according to the output of the comparator (74).

10. A noise reduction circuit for a video signal as claimed in claim 1 or 9, wherein the minimum value selector (32) comprises:
a comparator (74) for receiving the first and second maximum values to compare the levels thereof; and
a multiplexer (73) for outputting the lower-level signal between the first and second maximum values, according to the output of the comparator (74).

11. A noise reduction circuit for a video signal as claimed in any of the preceding claims, further comprising:
a correlation detector (50) for comparing the succeeding line video signal, present line video signal and preceding line video signal so as to detect the correlation between horizontal lines and output a selection signal; and
an output selector (51) for receiving the output signal of the subtracter (30) and the present line video signal so that, according to the selection signal of the correlation detector (50), if correlation does exist, the output of the subtracter (30) is selected, and if no correlation exists, the present line video signal is selected.

12. A noise reduction circuit for a video signal as claimed in claim 11, wherein the correlation detector (50) comprises:
an adder (79) for summing the succeeding line video signal and preceding line video signal;
an attenuator (80) for receiving the output of the adder so as to reduce the level by half;
a signal subtracter (81) for subtracting the output of the attenuator (80) from the present line video signal; and
a comparator (82) for comparing the output of the signal subtracter (81) with a reference level to output a selection signal.

13. A noise reduction circuit for a video signal as claimed in claim 11 or 12, wherein the output selector (51) comprises a multiplexer (87).

14. A video signal processing apparatus provided with a noise reduction apparatus according to any of the preceding claims.

15. An apparatus as claimed in claim 14, comprising a television and/or video recorder and/or reproducer.

## Patentansprüche

1. Rauschverringerungsschaltung für ein Videosignal, die umfaßt:
eine Video-Signalverzögerungsschaltung (21,22), die von aufeinanderfolgenden Eingangsvideosignalen ein Folgezeilen-Videosignal, ein Momentanzeilen-Videosignal, das um eine horizontale Zeile verzögert ist, sowie ein Vorgängerzeilen-Videosignal, das um zwei horizontale Zeilen verzögert ist, ausgibt;
einen Minimalwert-Detektor (32) für eine horizontale Zeile, der in einem ersten Minimalwert-Vergleichsschritt das Folgezeilen-Videosignal mit dem Momentanzeilen-Videosignal vergleicht und einen ersten Minimalwert ausgibt, und in einem zweiten Minimalwert-Vergleichsschritt das Momentanzeilen-Videosignal mit dem Vorgängerzeilen-Videosignal vergleicht und einen zweiten Minimalwert ausgibt;
einen Minimalwert-Selektor (27), der den ersten und den zweiten Minimalwert vergleicht und den höheren der beiden Werte auswählt und ausgibt;
einen Maximalwert-Detektor (33) für eine horizontale Zeile, der in einem ersten Maximalwert-Vergleichsschritt das Folgezeilen-Viedeosignal mit dem Momentanzeilen-Videosignal vergleicht und einen ersten Maximalwert ausgibt und in einem zweiten Maximalwert-Vergleichsschritt das Momentanzeilen-Videosignal mit dem Vorgängerzeilen-Videosignal vergleicht und einen zweiten Maximalwert ausgibt;
einen Minimalwert-Selektor (28), der den ersten und den zweiten Maximalwert miteinander vergleicht und den niedrigeren der beiden Werte auswählt und ausgibt;
einen Addierer (29), der den von dem Maximalwert-Selektor (27) ausgegebenen Maximalwert und den von dem Minimalwert-Selektor (28) ausgegebenen Minimalwert addiert und ein addiertes Signal ausgibt, das das Korrelationsrauschen einer horizontalen Zeile eines Videosignals enthält;
und einen Subtrahierer (30), der das Momentanzeilen-Videosignal von dem addierten Signal subtrahiert, das von dem Addierer ausgegeben wird, und ein Videosignal mit verringertem Rauschen ausgibt.

2. Rauschverringerungsschaltung für ein Videosignal nach Anspruch 1, wobei der Minimalwert-Detektor für eine horizontale Zeile umfaßt:
einen ersten Minimalwert-Detektor (23), der das Folgezeilen-Videosignal und das Momentanzeilen-Videosignal empfängt, die beiden Videosignale vergleicht und das Signal der beiden mit dem niedrigeren Pegel erfaßt und ausgibt; und
einen zweiten Minimalwert-Detektor (24), der das Momentanzeilen-Videosignal und das Vorgängerzeilen-Videosignal empfängt, die beiden Videosignale vergleicht und das Signal der beiden mit dem niedrigeren Pegel erfaßt und ausgibt.

3. Rauschverringerungsschaltung für ein Videosignal nach Anspruch 2, wobei der erste Minimalwert-Detektor (23) umfaßt:
einen Komparator (74), der das Folgezeilen-Videosignal und das Momentanzeilen-Videosignal empfängt und die Pegel derselben vergleicht; und
einen Multiplexer (73), der entsprechend dem Ausgang des Komparators (74) entweder das Folgezeilen-Videosignal oder das Momentanzeilen-Videosignal ausgibt.

4. Rauschverringerungsschaltung für ein Videosignal nach Anspruch 2 oder 3, wobei der zweite Minimalwert-Detektor (23) umfaßt:
einen Komparator (74), der das Momentanzeilen-Videosignal und das Vorgängerzeilen-Videosignal empfängt und die Pegel derselben vergleicht; und
einen Multiplexer (73), der entsprechend dem Ausgang des Komparators (74) entweder das Momentanzeilen-Videosignal oder das Vorgängerzeilen-Videosignal ausgibt.

5. Rauschverringerungsschaltung für ein Videosignal nach einem der vorangehenden Ansprüche, wobei der Maximalwert-Detektor für eine horizontale Zeile umfaßt:
einen ersten Maximalwert-Detektor (25), der das Folgezeilen-Videosignal und das Momentanzeilen-Videosignal empfängt, die beiden Videosignale vergleicht und das Signal der beiden mit höherem Pegel erfaßt und ausgibt; und
einen zweiten Maximalwert-Detektor (26), der das Momentanzeilen-Videosignal und das Vorgängerzeilen-Videosignal empfängt, die beiden Videosignale vergleicht und das Signal der beiden mit höherem Pegel erfaßt und ausgibt.

6. Rauschverringerungsschaltung für ein Videosignal nach Anspruch 5, wobei der erste Maximalwert-Detektor (25) umfaßt:
einen Komparator (74), der das Folgezeilen-Videosignal und das Momentanzeilen-Videosignal empfängt und die Pegel derselben vergleicht; und
einen Multiplexer (73), der entsprechend dem Ausgang des Komparators von dem Folgezeilen-Videosignal und dem Momentanzeilen-Videosignal das Signal mit höherem Pegel ausgibt.

7. Rauschverringerungsschaltung für ein Videosignal nach Anspruch 5 oder 6, wobei der zweite Maximalwert-Detektor (26) umfaßt:
einen Komparator (74), der das Momentanzeilen-Videosignal und das Vorgängerzeilen-Videosignal empfängt und die Pegel derselben vergleicht; und
einen Multiplexer (73), der entsprechend dem Ausgang des Komparators von dem Momentanzeilen-Videosignal und dem Vorgängerzeilen-Videosignal das Signal mit höherem Pegel ausgibt.

8. Rauschverringerungsschaltung für ein Videosignal nach Anspruch 5 ,6 oder 7, wenn abhängig von Anspruch 2, 3 oder 4, wobei die Videosignal-Verzögerungsschaltung (21,22) umfaßt:
eine erste Verzögerungsleitung (21), mit der das Momentanzeilen-Videosignal, das erzeugt wird, indem die nacheinander eingegebene Videosignale um eine horizontale Zeile verzögert werden, dem ersten und dem zweiten Minimalwert-Detektor (23, 24) sowie dem ersten und dem zweiten Maximalwert-Detektor (25, 26) zugeführt wird; und
eine zweite Verzögerungsleitung (22), die in Reihe mit dem Ausgang der ersten Verzögerungsleitung (21) verbunden ist und mit der das Vorgängerzeilen-Videosignal, das erzeugt wird, indem das Ausgangssignal der ersten Verzögerungsleitung um eine horizontale Zeile verzögert wird, dem zweiten Minimalwert-Detektor (24) und dem zweiten Maximalwert-Detektor (26) zugeführt wird.

9. Rauschverringerungsschaltung für ein Videosignal nach Anspruch 1, wobei der Maximalwert-Selektor (33) umfaßt:
einen Komparator (74), der den ersten und den zwelten Minimalwert empfängt und die Pegel derselben vergleicht; und
einen Multiplexer (73), der entsprechend dem Ausgang des Komparators von dem ersten und dem zweiten Maximalwert das Signal mit höherem Pegel ausgibt

10. Rauschverringerungsschaltung für ein Videosignal nach Anspruch 1 oder 9, wobei der Minimalwert-Seektor (32) umfaßt:
einen Komparator (74), der den ersten und den Maximalwert empfängt und die Pegel derselben vergleicht; und
einen Multiplexer (73), der entsprechend dem Ausgang des Komparators von dem ersten und dem zweiten Maximalwert das Signal mit niedrigerem Pegel ausgibt.

11. Rauschverringerungsschaltung für ein Videosignal nach einem der vorangehenden Ansprüche, die des weiteren umfaßt:
einen Korrelationsdetektor (50), der das Folgezeilen-Videosignal, das Momentanzeilen-Videosignal und das Vorgängerzeilen-Videosignal vergleicht, die Korrelation zwischen horizontalen Zeilen erfaßt und ein Auswahlsignal ausgibt; und
einen Ausgangsselektor (51), der das Ausgangssignal des Subtrahierers (30) und das Momentanzeilen-Videosignal empfängt, so daß entsprechend dem Auswahlsignal des Korrelationsdetektors (50), wenn Korrelation vorliegt, der Ausgang des Subtrahierers (30) ausgewählt wird, und wenn keine Korrelation vorliegt, das Momentanzeilen-Videosignal ausgewählt wird.

12. Rauschverringerungsschaltung für ein Videosignal nach Anspruch 11, wobei der Korrelationsdetektor (50) umfaßt:
einen Addierer (79), der das Folgezeilen-Videosignal und das Vorgängerzeilen-Videosignal addiert;
einen Abschwächer (80), der den Ausgang des Addierers empfängt und den Pegel um die Hälfte verringert;
einen Signalsubtrahierer (81), der den Ausgang des Abschwächers (80) von dem Momentanzeilen-Videosignal subtrahiert; und
einen Komparator (82), der den Ausgang des Signalsubtrahierers (81) mit einem Bezugspegel vergleicht und ein Auswahlsignal ausgibt.

13. Rauschverringerungsschaltung für ein Videosignal nach Anspruch 11 oder 12, wobei der Ausgangsselektor (51) einen Multiplexer (87) umfaßt.

14. Videosignal-Verarbeitungsvorrichtung, die mit einer Rauschverringerungsvorrichtung nach einem der vorangehenden Ansprüche versehen ist.

15. Vorrichtung nach Anspruch 14, die ein Fernsehgerät und/oder ein Videoaufnahme- und/oder Wiedergabegerät umfaßt.

## Revendications

1. Circuit réducteur de bruit pour un signal vidéo, comprenant :
un circuit à retard de signal vidéo (21, 22) destiné à fournir en sortie, à partir de signaux vidéo entrés consécutivement, un signal vidéo de ligne suivant, un signal vidéo de ligne présent retardé d'une ligne horizontale, et un signal vidéo de ligne précédent retardé de deux lignes horizontales;
un détecteur de valeur minimale (32) pour une ligne horizontale, qui, au cours d'une première étape de comparaison de valeur minimale, compare le signal vidéo de ligne suivant avec le signal vidéo de ligne présent afin de fournir en sortie une première valeur minimale, et qui, au cours d'une seconde étape de comparaison de valeur minimale, compare le signal vidéo de ligne présent avec le signal vidéo de ligne précédent afin de fournir en sortie une seconde valeur minimale;
un sélecteur de valeur maximale (27) destiné à comparer lesdites première et seconde valeurs minimales afin de sélectionner et de fournir en sortie la plus élevée des deux;
un détecteur de valeur maximale (33) pour une ligne horizontale, qui, au cours d'une première étape de comparaison de valeur maximale, compare le signal vidéo de ligne suivant avec le signal vidéo de ligne présent afin de fournir en sortie une première valeur maximale, et qui, au cours d'une seconde étape de comparaison de valeur maximale, compare le signal vidéo de ligne présent avec le signal vidéo de ligne précédent afin de fournir en sortie une seconde valeur maximale;
un sélecteur de valeur minimale (28) destiné à comparer lesdites première et seconde valeurs maximales afin de sélectionner et de fournir en sortie la plus faible des deux;
un additionneur (29) destiné à additionner la valeur maximale fournie par le sélecteur de valeur maximale (27) et la valeur minimale fournie par le sélecteur de valeur minimale (28) afin de fournir en sortie un signal somme contenant le bruit de corrélation d'une ligne horizontale d'un signal vidéo; et
un soustracteur (30) destiné à soustraire le signal vidéo de ligne présent du signal somme fourni par l'additionneur afin de fournir en sortie un signal vidéo à bruit réduit.

2. Circuit réducteur de bruit pour un signal vidéo, tel que défini dans la revendication 1, dans lequel le détecteur de valeur minimale pour une ligne horizontale comprend :
un premier détecteur de valeur minimale (23) qui reçoit le signal vidéo de ligne suivant et le.signal vidéo de ligne présent et qui compare les deux signaux vidéo afin de détecter et de fournir en sortie le signal de niveau le plus faible de ceux-ci; et
un second détecteur de valeur minimale (24) qui reçoit le signal vidéo de ligne présent et le signal vidéo de ligne précédent et qui compare les deux signaux vidéo afin de détecter et de délivrer en sortie le signal de niveau le plus faible de ceux-ci.

3. Circuit réducteur de bruit pour un signal vidéo, tel que défini dans la revendication 2, dans lequel le premier détecteur de valeur minimale (23) comprend :
un comparateur (74) destiné à recevoir le signal vidéo de ligne suivant et le signal vidéo de ligne présent pour comparer les niveaux de ceux-ci; et
un multiplexeur (73) destiné à fournir en sortie l'un du signal vidéo de ligne suivant et du signal vidéo de ligne présent en fonction de la sortie du comparateur (74).

4. Circuit réducteur de bruit pour un signal vidéo, tel que défini dans la revendication 2 ou 3, dans lequel le second détecteur de valeur minimale comprend :
un comparateur (74) destiné à recevoir le signal vidéo de ligne présent et le signal vidéo de ligne précédent pour comparer les niveaux de ceux-ci; et
un multiplexeur (73) destiné à fournir en sortie l'un du signal vidéo de ligne présent et du signal vidéo de ligne précédent en fonction de la sortie du comparateur (74).

5. Circuit réducteur de bruit pour un signal vidéo, tel que défini dans l'une quelconque des revendications précédentes, dans lequel le détecteur de valeur maximale pour une ligne horizontale comprend :
un premier détecteur de valeur maximale (25) qui reçoit le signal vidéo de ligne suivant et le signal vidéo de ligne précédent et qui compare les deux signaux vidéo afin de détecter et de fournir en sortie le signal de niveau le plus élevé de ceux-ci; et
un second détecteur de valeur maximale (26) qui reçoit le signal vidéo de ligne présent et le signal vidéo de ligne précédent et qui compare les deux signaux vidéo afin de détecter et de délivrer en sortie le signal de niveau le plus élevé de ceux-ci.

6. Circuit réducteur de bruit pour un signal vidéo, tel que défini dans la revendication 5, dans lequel le premier détecteur de valeur maximale (25) comprend :
un comparateur (74) destiné à recevoir le signal vidéo de ligne suivant et le signal vidéo de ligne présent pour comparer les niveaux de ceux-ci; et
un multiplexeur (73) -destiné à fournir en sortie le signal de niveau le plus élevé entre le signal vidéo de ligne suivant et le signal vidéo de ligne présent, en fonction de la sortie du comparateur.

7. Circuit réducteur de bruit pour un signal vidéo, tel que défini dans la revendication 5 ou 6, dans lequel le second détecteur de valeur maximale (26) comprend :
un comparateur (74) destiné à recevoir le signal vidéo de ligne présent et le signal vidéo de ligne précédent pour comparer les niveaux de ceux-ci; et
un multiplexeur (73) destiné à fournir en sortie le signal de niveau le plus élevé entre le signal vidéo de ligne présent et le signal vidéo de ligne précédent, en fonction de la sortie du comparateur (74).

8. Circuit réducteur de bruit pour un signal vidéo, tel que défini dans la revendication 5, 6 ou 7, lorsqu'elle est dépendante de la revendication 2, 3 ou 4, dans lequel le circuit à retard de signal vidéo (21, 22) comprend :
une première ligne à retard (21) destinée à délivrer le signal vidéo de ligne présent obtenu en retardant d'une ligne horizontale les signaux vidéo entrés consécutivement, aux premier et second détecteurs de valeur minimale (23, 24) et aux premier et second détecteurs de valeur maximale (25, 26); et
une seconde ligne à retard (22) montée en série avec la sortie de la première ligne à retard (21) pour délivrer le signal vidéo de ligne précédent obtenu en retardant d'une ligne horizontale le signal de sortie de la première ligne à retard, au second détecteur de valeur minimale (24) et au second détecteur de valeur maximale (26).

9. Circuit réducteur de bruit pour un signal vidéo, tel que défini dans la revendication 1, dans lequel le sélecteur de valeur maximale (33) comprend :
un comparateur (74) destiné à recevoir les première et seconde valeurs minimales pour comparer les niveaux de celles-ci; et
un multiplexeur (73) destiné à fournir en sortie le signal de niveau le plus élevé entre les première et seconde valeurs minimales, en fonction de la sortie du comparateur (74).

10. Circuit réducteur de bruit pour un signal vidéo, tel que défini dans la revendication 1 ou 9, dans lequel le sélecteur de valeur minimale (32) comprend :
un comparateur (74) destiné à recevoir les première et seconde valeurs maximales pour comparer les niveaux de celles-ci; et
un multiplexeur (73) destiné à fournir en sortie le signal de niveau le plus faible entre les première et seconde valeurs maximales, en fonction de la sortie du comparateur (74).

11. Circuit réducteur de bruit pour un signal vidéo, tel que défini dans l'une quelconque des revendications précédentes, comprenant également :
un détecteur de corrélation (50) destiné à comparer le signal vidéo de ligne suivant, le signal vidéo de ligne présent et le signal vidéo de ligne précédent afin de détecter la corrélation entre des lignes horizontales et de fournir en sortie un signal de sélection; et
un sélecteur de sortie (51) destiné à recevoir le signal de sortie du soustracteur (30) et le signal vidéo de ligne présent afin qu'en fonction du signal de sélection du détecteur de corrélation (50), la sortie du soustracteur (30) soit sélectionnée, s'il y a effectivement corrélation, et que le signal vidéo de ligne présent soit sélectionné, s'il n'y pas corrélation.

12. Circuit réducteur de bruit pour un signal vidéo, tel que défini dans la revendication 11, dans lequel le détecteur de corrélation (50) comprend :
un additionneur (79) destiné à additionner le signal vidéo de ligne suivant et le signal vidéo de ligne précédent;
un atténuateur (80) destiné à recevoir la sortie de l'additionneur afin de réduite le niveau de moitié;
un soustracteur de signal (81) destiné à soustraire la sortie de l'atténuateur (80) du signal vidéo de ligne présent; et
un comparateur (82) destiné à comparer la sortie du soustracteur de signal (81) avec un niveau de référence pour fournir en sortie un signal de sélection.

13. Circuit réducteur de bruit pour un signal vidéo, tel que défini dans la revendication 11 ou 12, dans lequel le sélecteur de sortie (51) comprend un multiplexeur (87).

14. Appareil de traitement de signal vidéo équipé d'un dispositif réducteur de bruit selon l'une quelconque des revendications précédentes.

15. Dispositif tel que défini dans la revendication 14, comprenant une télévision et/ou un enregistreur et/ou lecteur vidéo.
